# FASCICULE DE BREVET EUROPEEN

(11) **EP 0 655 290 B1**
(45) Date de publication et mention de la délivrance du brevet: **13.08.1997**
(21) Numéro de dépôt: 93420468.6
(22) Date de dépôt: 25.11.1993
(51) Int. Cl.: B23D 21/08

(54) **Dispositif de serrage de tubes sur coupe-tubes manuels**
Rohrhaltevorrichtung an handgeführtem Rohrschneidgerät
Pipe clamping device on manual pipe cutter

(43) Date de publication de la demande: 31.05.1995
(73) Titulaire: SUPER-EGO TOOLS S.A., E-48220 Abadiano (Vizcaya) (ES)
(72) Inventeur: Azkona Ollacarizqueta, Manuel, E-48220 Abadiano (Vizcaya) (ES)
(74) Mandataire: Dupuis, François

(56) Documents cités:
- CH-A- 382 697
- US-A- 3 163 932
- US-A- 4 305 205
- SOVIET INVENTIONS ILLUSTRATED Section PQ, Week 8821, 26 Mai 1988 Derwent Publications Ltd., London, GB; Class P54, AN 88-146114 & SU-A-1 348 087 (ANIMAL POULTRY FARM) 30 Octobre 1987

## Description

La présente invention traite d'un dispositif de serrage de tubes sur coupe-tubes manuels, selon le préambule de la revendication 1.

L'appui du tube sur les coupe-tubes manuels s'exerce, actuellement, en trois points dont deux trouvent leur emplacement sur le corps du coupe-tubes tandis que le troisième s'applique sur le disque de coupe lui-même.

Ce système présente une faible sécurité de serrage, spécialement sur les tubes de grands diamètres, lesquels peuvent en arriver à tomber durant les opérations de coupe.

La présente invention traite d'un dispositif destiné à fixer des tubes sur des coupe-tubes manuels, grâce auxquels on arrive, dans tous les cas, à un serrage continu du tube en trois points, dont deux s'exercent sur le corps du coupe-tubes et le troisième sur le dispositif même de serrage faisant l'objet de l'invention, de sorte que ces points d'appui ne dépendent guère du disque de coupe.

Pour nous aider à mieux comprendre l'objet de la présente invention, on trouvera représentée sur les plans une forme choisie de réalisation pratique, susceptible de changements accessoires qui n'en affecteront nullement le fondement.

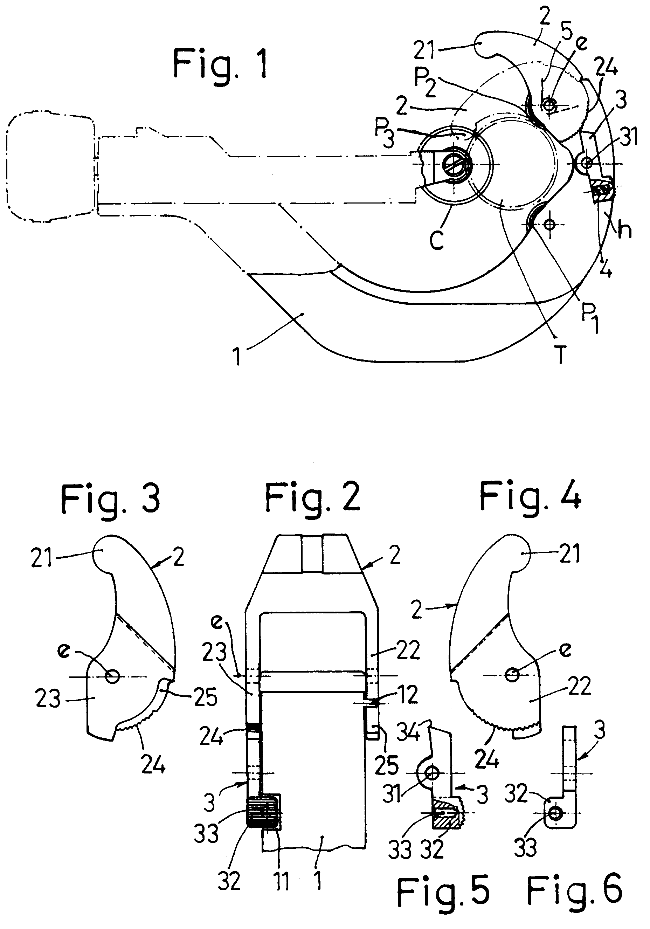

La figure 1 représente une vue en plan vertical d'un coupe-tubes et du dispositif de serrage de tubes sur coupe-tubes manuels, tel que dispose l'invention.

On a représenté en traits et points sur ladite figure la silhouette d'un coupe-tubes (1), d'un tube (T) disposé à être tranché à la came (2) en position de travail. En trait continu la came (2) en position d'ouverture.

La figure 2 représente une vue schématique de face correspondant à la figure antérieure.

Les figures 3 et 4 représentent les deux vues latérales de la came (2), lesquelles permettent d'en apprécier la structure et les caractéristiques particulières

Les figures 5 et 6 représentent les deux vues du cliquet, en plan vertical et de côté.

Passons désormais à la présentation d'un exemple de réalisation pratique, non limitative, de la présente invention. On ne peut écarter en aucune manière d'autres modes de réalisation, dans lesquels seraient introduites des modifications accessoires que n'en affecteraient guère le principe; à l'inverse, la présente invention en embrasse toutes les variantes.

Le dispositif de serrage de tubes sur coupes-manuels comporte, suivant en cela ce que dispose l'invention, une came (2) et un cliquet (3) montés sur le corps (1) du coupe-tubes, en particulier sur la tête (h) sur laquelle on dispose le tube (T) prêt à être coupé.

Les deux éléments du dispositif -came (2) et cliquet (3)- peuvent s'encliqueter l'un à l'autre et sont montés sur le corps (1) du coupe-tubes avec l'option de basculer par rapport à ce dernier à l'aide de systèmes tendant à les maintenir en position de verrouillage mutuel.

Selon la réalisation ici représentée, la came (2) se structure sur un corps monopièce de forme allongée, lequel configure à l'une de ses extrémités une tête (21) de configuration courbe pour son appui sur le tube (T) en position de travail, tandis que l'extrémité opposée se fourche sur les deux ailes latérales (22), (23), au moyen d'un axe de pivotement (e). L'une des ailes comporte un rochet à dents à son extrémité (24) tandis que l'autre présente un rabaissement en arc (25).

Le cliquet (3), suivant en cela la réalisation représentée, vient se structurer sur un corps monopièce qui pivote avec l'axe (31) sur le corps (1).

Le cliquet (3), à l'une de ses extrémités, configure une tête (32) en vue de son actionnement manuel, qui vient se loger dans la cavité (11) du corps (1).

En position de travail, une fois que l'on a placé manuellement la tête (21) sur le tube à couper (T), l'onglet (34) du cliquet (3) vient s'encliqueter sur le rochet à dents (24) pour tendre à rester encliqueté par l'action d'un ressort (4) logé dans la cavité (33) et qui va buter contre le coprs même (1) du coupe-tubes.

Nous avons trois points d'appui (P1), (P2), (P3), dans cette position de travail, en marge de l'encastrement lame (c)-tube (T).

Il suffit, pour dégager le cliquet (3) et permettre le libre-basculement de la came (3) -entre deux positions extrêmes délimitées par l'amplitude du rabaissement en arc (25) sur lequel va une butée fixe (12) qui ressort du corps (1)- de faire pression sur la tête du cliquet (3) pour que celui-ci bascule en surmontant l'action du ressort (4).

On dispose d'un ressort (5) monté autour de l'axe de rotation (e) de la came, ses extrémités étant positionnées sur la came elle-même (2) ainsi que sur le corps du coupe-tubes (1) de sorte qu'il tendra constamment de préférence à positionner la came dans sa position d'ouverture, bien qu'il entre dans l'objet de cette invention que ledit ressort (r) remplisse également la fonction inverse.

## Revendications

1. Dispositif de serrage de tubes sur coupe-tubes manuels, du type de ceux disposant sur la tête du coupe-tubes de deux points d'appui pour le tube, caractérisé en ce que la tête (h) du coupe-tubes dispose de manière pivotante :
a) d'une came (2) dont la tête lui sert d'appui en position de travail sur le tube (T) et pourvu d'un rochet à dents (24);
b) d'un cliquet (3), destiné à s'encliqueter avec ledit rochet à dents (24).

2. Dispositif de serrage de tubes sur coupe-tubes manuels selon la revendication 1, caractérisé par le fait que ladite came se structure sur un corps monopièce allongé dont l'une des extrémités configure la tête (21) d'appui tandis que l'extrémité opposée se fourche sur les deux ailes (22 -23) qui vont de part et d'autre de la tête du coupe-tubes sur lequel se monte la came de façon pivotante.

3. Dispositif de serrage de tubes sur coupe-tubes manuels, selon la revendication 1, caractérisé en ce que ledit cliquet (3) vient se structurer sur un corps monopièce allongé, dont l'une des extrémités configure une tête (32) moletée, élargie par rapport au corps et logée dans une cavité (11) conjuguée de la tête du coupe-tubes, dans laquelle elle se monte de manière articulée.

4. Dispositif de serrage de tubes sur coupe-tubes manuels, selon la revendication 1 caractérisé par le fait que l'on trouve un rabaissement en arc (25) préformé, disposé sur l'une des ailes de la came pour se transformer en guide de butée fixe (12), sortant du corps du coupe-tubes.

5. Dispositif de serrage de tubes sur coupe-tubes manuels, selon la revendication 1, caractérisé par le fait que l'on dispose un ressort (4) entre la came et la tête du coupe-tubes, tendant à positionner la came en position d'ouverture.

## Claims

1. Device for clamping pipes on manual pipe cutters of the type having, on the head of the pipe cutter, two supporting points for the pipe characterised in that the head (h) of the pipe cutter has a swivel-mounted:
a) cam (2) of which the head is used as a support in the position when working on the pipe (T) and is provided with a toothed ratchet (24),
b) a pawl (3), intended to latch with said toothed ratchet (24).

2. Device for clamping pipes on manual pipe cutters as claimed in claim 1 characterised in that said cam is built onto an elongated one-piece body, one end of which configures the support head (21) whereas the opposite end forks into two arms (22-23) which extend either side of the pipe-cutter head on which the cam is swivel-mounted.

3. Device for clamping pipes on manual pipe cutters as claimed in claim 1 characterised in that said pawl (3) is built onto an extended one-piece body, one end of which configures a knurled head (32) that is broadened in comparison with the body and accommodated in a cavity (11) joined to the pipe-cutter head on which it is hinge-mounted.

4. Device for clamping pipes on manual pipe cutters as claimed in claim 1 characterised in that there is a pre-formed arc-shaped dip (25) along one of the sides of the cam in order to make it into a fixed limit-stop guide emerging from the body of the pipe cutter.

5. Device for clamping pipes on manual pipe cutters as claimed in claim 1 characterised in that a spring (4) is fitted between the cam and pipe-cutter head and the spring tends to keep the cam in the opened position.

## Patentansprüche

1. Vorrichtung zum Einspannen von Rohren an manuellen Rohrschneidern nach Art der Systeme, die am Kopf des Rohrschneiders über zwei Auflagepunkte für das Rohr verfügen, dadurch gekennzeichnet, daß der Kopf (h) des Rohrschneiders folgende schwenkbare Vorkehrungen besitzt:
a) einen Nocken (2), dessen Kopf ihm in der Arbeitsstellung am Rohr (T) als Stütze dient, und ein Sperrad (24);
b) eine Sperrklinke (3) zum Verrasten mit dem besagten Sperrad (24).

2. Vorrichtung zum Einspannen von Rohren an manuellen Rohrschneidern nach Anspruch 1, dadurch gekennzeichnet, daß der Nocken sich auf einen länglichen einstückigen Körper plaziert, von dem ein Ende den Stützkopf (21) bildet, während sich das entgegengesetzte Ende in zwei Flügelteile (22-23) aufgabelt, die beiderseits des Kopfes des Rohrschneiders verlaufen, an dem der Nocken schwenkbar angebracht wird.

3. Vorrichtung zum Einspannen von Rohren an manuellen Rohrschneidern nach Anspruch 1, dadurch gekennzeichnet, daß die Sperrklinke (3) an einem länglichen einstückigen Körper zu liegen kommt, von dem ein Ende einen gerändelten Kopf (32) bildet, der im Verhältnis zum Körper verbreitert ist und in einer gemeinsamen Vertiefung (11) des Rohrschneiderkopfes sitzt, in der er gelenkig gelagert ist.

4. Vorrichtung zum Einspannen von Rohren an manuellen Rohrschneidern nach Anspruch 1, dadurch gekennzeichnet, daß an einem der Flügelteile des Nockens eine bogenartig vorgeformte Absenkung (25) vorhanden ist, um sich durch Hervortreten aus dem Körper des Rohrschneiders in eine Führung für einen ortsfesten Anschlag (12) zu verwandeln.

5. Vorrichtung zum Einspannen von Rohren an manuellen Rohrschneidern nach Anspruch 1, dadurch gekennzeichnet, daß zwischen Nocken und Rohrschneiderkopf eine Feder (4) eingesetzt wird, die bestrebt ist, den Nocken in die Öffnungsstellung zu bringen.
